# EUROPEAN PATENT SPECIFICATION

(11) **EP 4 071 486 B1**
(45) Date of publication and mention of the grant of the patent: **11.11.2026**
(21) Application number: 20895327.3
(22) Date of filing: 02.12.2020
(51) Int. Cl.: G01N 35/10, G01F 23/263

(54) **AUTOMATIC ANALYSIS DEVICE**
AUTOMATISCHE ANALYSEVORRICHTUNG
DISPOSITIF D'ANALYSE AUTOMATIQUE

(30) Priority: 05.12.2019 JP 2019220166; 16.04.2020 JP 2020073408
(43) Date of publication of application: 12.10.2022
(73) Proprietor: Hitachi High-Tech Corporation, Minato-ku Tokyo 105-6409 (JP)
(72) Inventor: HORIE, Yosuke, Tokyo 100-8280 (JP); OCHI, Manabu, Tokyo 100-8280 (JP); MURAMATSU, Yoshiki, Tokyo 105-6409 (JP); KAWAHARA, Tetsuji, Tokyo 105-6409 (JP); MINAMI, Noritaka, Tokyo 105-6409 (JP); HAMADA, Hiroki, Tokyo 105-6409 (JP)
(74) Representative: Strehl & Partner mbB
(86) International application number: PCT/JP2020/044840
(87) International publication number: WO 2021/112120

(56) References cited:
- JP-A- 2008 111 767
- JP-A- 2017 009 299
- JP-A- 2018 194 301
- JP-A- 2018 194 301
- JP-B2- 6 608 129
- US-A1- 2011 171 069

## Description

### Technical Field

The present invention relates to an automatic analyzer.

### Background Art

An automatic analyzer, for example, a biochemical automatic analyzer analyzes the components of a biological sample, such as blood serum and urine (in the following, referred to as a sample). In such a biochemical automatic analyzer, in general, a sample and a reagent are dispensed into a reaction container for reaction using dispensing probes, and changes in color tones or turbidity produced in a solution are optically measured by a photometric unit, such as a spectrophotometer. Consequently, contaminants and the like on the probe affect the accuracy of dispensing, which also affect the reliability of the automatic analyzer as a result. Therefore, after dispensing a sample and the like, the sample and the like attached to the outer surface or the inner surface of the probe is washed in a washing chamber with a washing fluid.

However, when the performance of a pump that supplies a washing fluid for washing the outer surface of the probe is degraded due to degradation over time or clogging of a passage from the pump to the discharge port of the washing fluid, the liquid amount of the washing fluid changes. In the case where the washing fluid amount is small, for example, it is not possible to sufficiently wash the probe, and carry-over and the like might occur. On the other hand, in the case where the washing fluid amount is large, for example, water droplets might remain at the tip end of the probe. In order to cope with such changes in the washing fluid amount, in general, an operator periodically performs maintenance that adjusts the washing fluid amount. However, this is manual adjustment, which takes time or causes variations.

Here, as a technique for automatically adjusting a washing fluid amount, Patent Literature 1 is known, for example. This Patent Literature 1 discloses an automatic analyzer (claim 1) including:
a washing fluid supply unit that supplies a washing fluid used for washing a probe; a washing pool that stores the supplied washing fluid; a liquid level detection unit that detects a liquid level of the washing fluid stored in the washing pool; a washing fluid amount calculation unit that calculates a washing fluid amount of the washing fluid based on a result that the liquid level of the washing fluid is detected by the liquid level detection unit; a washing fluid amount determination unit that determines whether the calculated washing fluid amount falls in a predetermined range; and a washing fluid amount adjustment unit that adjusts the washing fluid amount of the washing fluid supplied from the washing fluid supply unit to fall in a predetermined range in a case where the washing fluid amount determination unit determines that the calculated washing fluid amount does not fall in the predetermined range.
The document JP201394301A discloses a device where the amount of cleaning liquid supplied is determined by measuring the change liquid level in a cleaning pool and uses the result in a cleaning liquid amount adjusting function. The document US 2011/0171069 A1 proposes to measure a cleaning range ejected from a nozzle for the purpose of position control of the dispensing nozzle.

### Citation List

### Patent Literature

Patent Literature 1: Japanese Unexamined Patent Application Publication No. 2018-194301

### Summary of Invention

### Technical Problem

However, in the method described in Patent Literature 1, the pool that stores the washing fluid or a valve that discharges the washing fluid stored in the pool has to be provided, which might cause an increase in the size or costs of the automatic analyzer.

Moreover, in the method described in Patent Literature 1, assurance is not established whether the washing fluid is in contact with the probe on a trace as assumed. Furthermore, when water remains in the pool before the washing fluid is supplied or water is not allowed to remain the pool due to the failure of the valve, the washing fluid amount might be misread.

The present invention has been made in view of the circumstances, and an object of the present invention is to provide an automatic analyzer of high reliability that surely causes a proper amount of a washing fluid to contact a dispensing probe while suppressing an increase in its size or costs.

### Solution to Problem

In order to solve the problems, the present invention proposes an automatic analyzer according to claim 1 and an automatic analyzer according to claim 6.

### Advantageous Effects of Invention

According to the present invention, it is possible to provide an automatic analyzer of high reliability that surely causes a proper amount of a washing fluid to contact a dispensing probe while suppressing an increase in its size or costs.

### BRIEF DESCRIPTION OF THE DRAWINGS

FIG. 1 is schematic configuration diagram of an automatic analyzer.
FIG. 2 is a view showing a configuration of a supply path of a washing fluid.
FIG. 3 is a flow chart showing an adjusting method of a liquid amount in an embodiment 1.
FIGs. 4A and 4B are views showing a reference washing position (a first position) and a washing amount confirming position (a second position).
FIGs. 5A and 5B are views showing a change in a trace of a washing fluid at the time of fluid amount adjusting (at the time of discharging in a downward direction).
FIG. 6 is a view showing a change in a trace of the washing fluid at the time of liquid amount adjusting (at the time of discharging in an upward direction).
FIG. 7 is a flow chart showing an adjusting method of a liquid amount in an embodiment 2.
   FIG. 8 is a diagram showing the configuration of a sample dispensing mechanism in an embodiment 3.
   FIG. 9 is a diagram showing an example configuration of a washing fluid amount adjusting unit of a sample dispensing probe.
   FIG. 10A is a diagram showing example descending positions of the sample dispensing probe in an embodiment 3, showing a liquid current state in the case in which a sample is discharged in a reference solution amount.
   FIG. 10B is a diagram showing example descending positions of the sample dispensing probe in an embodiment 3, showing a liquid current state in the case in which the liquid amount is decreased below the reference solution amount.
   FIG. 11 is a graph showing the relationship between a washing fluid amount discharged from a washing nozzle within a certain time period and a probe descending distance from a reference position to detection of a washing fluid top end.
   FIG. 12 is a diagram showing an example configuration of a control block for probe washing and probe washing fluid amount adjustment.
   FIG. 13 is a flowchart showing the operation of the washing fluid amount adjusting unit in confirming the washing fluid amount.
   FIG. 14 is a flowchart showing liquid amount adjustment operation by a proportional valve.
   FIG. 15 is a flowchart showing the operation of washing fluid amount detection.
   FIG. 16 is a diagram showing an example of a proportional valve control table.
   FIG. 17 is a diagram showing an example of a liquid level detection signal in the operation flow of liquid current detection.
   FIG. 18 is a diagram showing a liquid current state when the flow rate of a washing fluid current is fast and an example descending position of the sample dispensing probe.
FIG. 19 is a diagram showing the relationship between the manipulated variable of the proportional valve and a change in a flow rate.

### Description of Embodiments

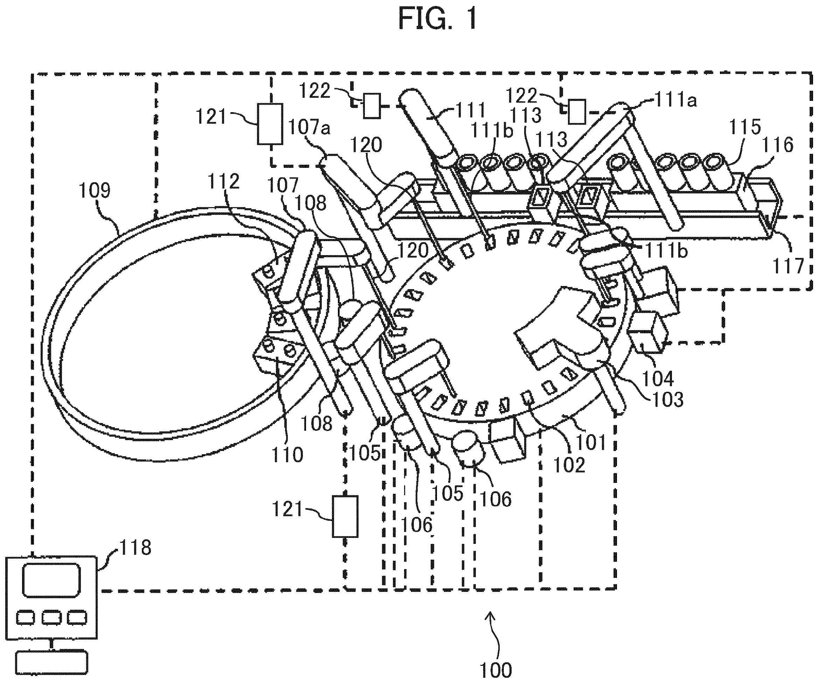

An embodiment of the present invention will be described in detail with reference to the drawings. FIG. 1 is a schematic configuration diagram of an automatic analyzer of the present embodiment. An automatic analyzer 100 is a device that measures a reaction solution subjected to chemical reaction in a reaction container 102 to analyze components. This automatic analyzer 100 has, as main components, a reaction disk 101, a washing mechanism 103, a spectrophotometer 104, a stirring mechanism 105, a washing chamber 106, a first reagent dispensing mechanism 107, a second reagent dispensing mechanism 107a, a washing chamber 108, a reagent disk 109, a first sample dispensing mechanism 111, a second sample dispensing mechanism 111a, a washing chamber 113, a sample transfer mechanism 117, and a controller 118. Moreover, the first reagent dispensing mechanism 107, the second reagent dispensing mechanism 107a, the first sample dispensing mechanism 111, and the second sample dispensing mechanism 111a have a liquid level detection function.

In the reaction disk 101, the reaction containers 102 are disposed on the circumference of a circle. The reaction container 102 is a container that contains a mixed solution having a sample and a reagent mixed, and a plurality of reaction containers 102 is arranged on the reaction disk 101. Near the reaction disk 101, the sample transfer mechanism 117 that transfers a sample rack 116 having a sample vessel 115 equipped is disposed.

Between the reaction disk 101 and the sample transfer mechanism 117, the first sample dispensing mechanism 111 and the second sample dispensing mechanism 111a that are capable of rotating and moving up and down are disposed, and both include a sample dispensing probe 111b. To the individual sample dispensing probes 111b, a sample syringe 122 is connected. The sample dispensing probe 111b horizontally moves while drawing a segment of a circle, vertically moves, and dispenses a sample from the sample vessel 115 to the reaction container 102.

The reagent disk 109 is a storeroom in which pluralities of reagent bottles 110 having a reagent contained their inside and detergent bottles 112 and the like can be placed on the circumference of a circle. The reagent disk 109 is kept at a low temperature.

Between the reaction disk 101 and the reagent disk 109, the first reagent dispensing mechanism 107 and the second reagent dispensing mechanism 107a that are capable of rotating and vertically moving are installed, and both include a reagent dispensing probe 120. The reagent dispensing probe 120 is vertically and horizontally moved by the first reagent dispensing mechanism 107 or the second reagent dispensing mechanism 107a. To the individual reagent dispensing probes 120, a reagent syringe 121 is connected. With this reagent syringe 121, a reagent, detergent, diluent, pre-processing reagent, and the like aspirated from the reagent bottle 110, the detergent bottle 112, a diluent bottle, a pre-processing reagent bottle, and the like aspirated through the reagent dispensing probe 120 are dispensed into the reaction container 102.

Around the reaction disk 101, the washing mechanism 103 that washes the inside of the reaction container 102, the spectrophotometer 104 that measures the absorbance of light transmitted through the mixed solution in the reaction container 102, the stirring mechanism 105 that mixes the sample and the reagent dispensed into the reaction container 102, and the like are disposed.

Moreover, the washing chamber 108 for the reagent dispensing probe 120 is disposed on the operation range of the first reagent dispensing mechanism 107 or the second reagent dispensing mechanism 107a, the washing chamber 113 for the sample dispensing probe 111b is disposed on the operation range of the first sample dispensing mechanism 111 or the second sample dispensing mechanism 111a, and the washing chamber 106 for the stirring mechanism 105 is disposed on the operation range of the stirring mechanism 105.

The mechanisms are is connected to the controller 118, and the operations of the mechanisms are controlled by the controller 118. The controller 118 that is a control unit is constituted of a computer and the like, the controller 118 controls the operations of the above-described mechanisms in the automatic analyzer, and performs arithmetic processing that determines the concentration of a predetermined component in a liquid sample, such as blood or urine.

The analysis process for a test sample by the automatic analyzer 100 as described above is executed according to the following order. First, a sample in the sample vessel 115 placed on the sample rack 116 transferred near the reaction disk 101 by the sample transfer mechanism 117 is dispensed into the reaction container 102 on the reaction disk 101 by the first sample dispensing mechanism 111 and the sample dispensing probe 111b of the second sample dispensing mechanism 111a. Subsequently, a reagent used for analysis is dispensed from the reagent bottle 110 on the reagent disk 109 to the reaction container 102 into which the sample is dispensed before by the first reagent dispensing mechanism 107 or the second reagent dispensing mechanism 107a. Subsequently, the stirring mechanism 105 stirs a mixed solution of the sample and the reagent in the reaction container 102.

After that, light generated from a light source is caused to transmit the reaction container 102 containing the mixed solution, and the luminous intensity of the transmitted light is measured by the spectrophotometer 104. The luminous intensity measured by the spectrophotometer 104 is sent to the controller 118 through an A/D converter and an interface. The controller 118 then performs arithmetic operation, finds the concentration of a predetermined component the liquid sample, such as blood or urine, and causes a display unit (not shown) and the like to display the result. Note that an example of the automatic analyzer that finds the concentration of a predetermined component using the spectrophotometer 104 is taken for description. However, techniques disclosed in embodiments, described later, may be used for immune automatic analyzers or coagulation automatic analyzers that measure samples using another photometer.

### Embodiment 1

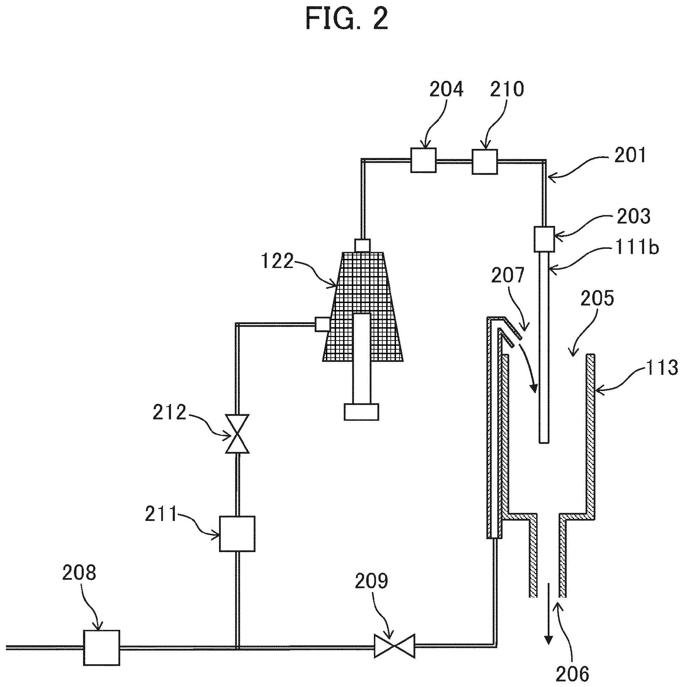

Next, the schematic configuration of the supply path of a washing fluid in an automatic analyzer 100 according to an embodiment 1 will be described with reference to FIG. 2. As shown in FIG. 2, a sample dispensing probe 111b constituting a sample dispensing mechanism is connected to a tube 201 that forms a dispensing passage through a nipple 203. Moreover, the upstream of the dispensing passage is connected to a sample syringe 122 that aspirates and discharges a sample, and in the midway point of the dispensing passage from this sample syringe 122 to the sample dispensing probe 111b, a pressure sensor 204 that detects the pressure in the passage is provided. The sample dispensing mechanism is connected to a liquid level detecting device 210 that detects the electrostatic capacitance of the sample dispensing probe 111b, and in the case where a sample or a washing fluid contacts the tip end of the sample dispensing probe 111b, the contact is detected based on a change in electrostatic capacitance.

Furthermore, the automatic analyzer of the present embodiment includes a washing chamber 113 that washes the sample dispensing probe 111b and a washing fluid supply pump 208 that supplies a washing fluid from a tank (not shown). Here, the washing chamber 113 includes an upper opening part 205 which the sample dispensing probe 111b accesses for washing, a washing fluid discharge port 207 that discharges a washing fluid toward the outer surface of the accessed sample dispensing probe 111b, and a lower opening part 206 that drains the discharged washing fluid. Moreover, the downstream side of the washing fluid supply pump 208 is branched into two passages. One of the two passages becomes an internal washing passage in which the inner surface of the sample dispensing probe 111b washes, and the other becomes an external washing passage in which the outer surface of the sample dispensing probe 111b washes.

The internal washing passage further includes a liquid transfer pump 211 that is a high pressure pump higher than the washing fluid supply pump 208. On the downstream side of the liquid transfer pump 211, an electromagnetic valve 212 for internal washing that opens and closes the passage communicating the liquid transfer pump 211 with the sample syringe 122 is provided.

On the other hand, the external washing passage is provided with an electromagnetic valve 209 for external washing that opens and closes the passage communicating from the washing fluid supply pump 208 to the washing fluid discharge port 207. The opening and closing and the degree of opening of the electromagnetic valve 212 for internal washing and the electromagnetic valve 209 for external washing can be changed in response to an electrical signal input from a controller 118. For example, when a predetermined electric current is applied to the electromagnetic valve 209 for external washing, the electromagnetic valve 209 for external washing achieves a predetermined degree of opening, and a predetermined liquid amount of the washing fluid is supplied to the downstream side.

In the case where a sample is dispensed, the inside of the dispensing passage is filled with system water (pure water), the sample syringe 122 is operated to discharge or aspirate the system water in the dispensing passage for discharging aspirating the sample. Whether to succeed dispensing at this time is determined using pressure data detected by the pressure sensor 204. Note that in the case where the sample is dispensed, the solenoid valve 212 for internal washing is closed.

Subsequently, in the case where the inner surface of the sample dispensing probe 111b is washed, the washing fluid supply pump 208 is operated to supply the washing fluid to the liquid transfer pump 211. The liquid transfer pump 211 increases the pressure of the washing fluid and transfers the washing fluid to the downstream side, passes the washing fluid as the system water through the dispensing passage to wash the inner surface of the sample dispensing probe 111b, and discharges the system water from the tip end of the sample dispensing probe 111b into the inside of the washing chamber 113.

On the other hand, in the case where the outer surface of the sample dispensing probe 111b is washed, the washing fluid supply pump 208 is operated and the electromagnetic valve 209 for external washing is opened, and the washing fluid is discharged from the washing fluid discharge port 207 toward the outer surface of the sample dispensing probe 111b.

Here, in regard to the liquid amount of the washing fluid discharged from the washing fluid discharge port 207, it is likely that the targeted liquid amount is not obtained due to degradation over time in the washing fluid supply pump 208, the clogging of the external washing passage, and the like, even though the degree of opening of the electromagnetic valve 209 for external washing is constant. Therefore, it is important to periodically adjust the liquid amount of the washing fluid to be supplied to the washing fluid discharge port 207. In the following, an adjusting method of a liquid amount executed in the case where a maintenance mode is executed will be described. Here, the adjustment of the liquid amount of the washing fluid means the adjustment of the liquid amount per unit time discharged from the tip end of the sample dispensing probe 111b.

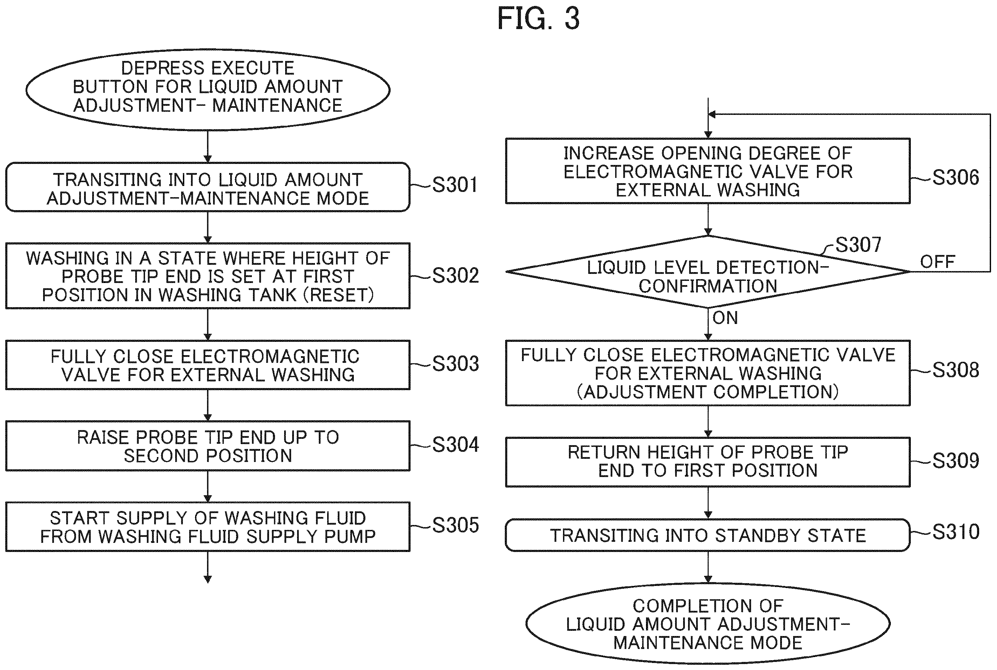

FIG. 3 is a flowchart showing an adjusting method of a liquid amount in the embodiment 1. First, when a button for executing maintenance that adjusts the washing fluid amount in the sample dispensing probe 111b is depressed by the manipulating unit of the controller 118, the mode transitions to maintenance mode (Step S301).

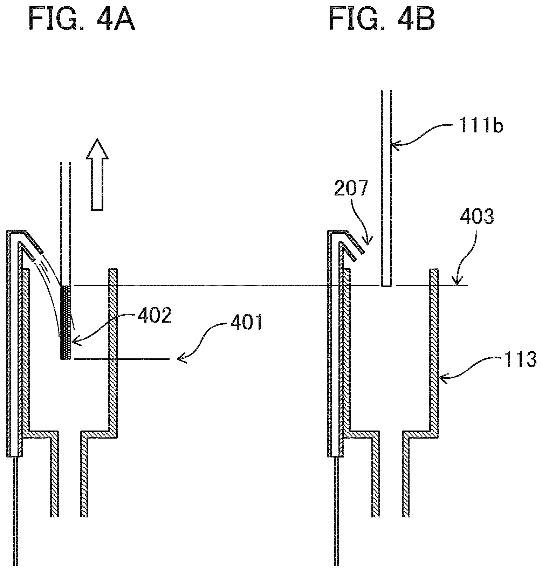

The controller 118 then operates the first sample dispensing mechanism 111 is operated to move the sample dispensing probe 111b in the washing chamber 113. Furthermore, as shown in FIG. 4A, the controller 118 retains the state where the height of the tip end of the sample dispensing probe 111b is at a reference washing position (first position) 401 to wash the outer surface and inner surface of the sample dispensing probe 111b (Step S302). This reference washing position is the height that is the reference when the sample dispensing probe 111b is washed, and a normal washing operation is performed at this position. Note that Step S302 is the step of resetting the position of the sample dispensing probe 111b, and thus washing the outer surface and inner surface of the sample dispensing probe 111b is not mandatory. Moreover, the washing fluid that has washed the outer surface of the sample dispensing probe 111b and the system water that has washed the inner surface of the sample dispensing probe 111b is washed are aspirated in a vacuum manner and removed.

Subsequently, the controller 118 fully closes the electromagnetic valve 209 for external washing for preparation of adjusting the washing fluid amount (Step S303). Thus, washing the outer surface of the sample dispensing probe 111b is finished. At this timing, washing the inner surface is also finished. Note that a configuration may be provided in which a solenoid valve connected in series, not shown, is provided, which is provided separately from the electromagnetic valve 209 for external washing, and washing the outer surface is finished with this solenoid valve. In this case, Step S303 may be provided after Step S304, described later. In any case, the solenoid valve for external washing only has to be fully closed before Step S305, described later.

After that, as shown in FIG. 4B, the controller 118 raises the tip end of the sample dispensing probe 111b to a washing fluid amount confirming position 403 (Step S304). The washing fluid amount confirming position 403 in the present embodiment is the same as the highest position (second position) in a washing range 402 that is a target in the case where the washing fluid in the reference solution amount is discharged from the washing fluid discharge port 207 when the tip end of the sample dispensing probe 111b is at the reference washing position.

The controller 118 then starts supply of the washing fluid from the washing fluid supply pump 208 (Step S305).
Furthermore, the controller 118 gradually increases the degree of opening of the electromagnetic valve 209 for external washing (Step S306). As a method of increasing the degree of opening of the electromagnetic valve 209 for external washing, the degree of opening may be increased continuously or step by step. An increase in the degree of opening of the electromagnetic valve 209 for external washing is performed until the liquid level detecting device 210 as a washing fluid detecting unit is turned on (Step S307).

Upon detecting the washing fluid present at the tip end of the sample dispensing probe 111b to turn on the liquid level detecting device 210, the controller 118 fully closes the electromagnetic valve 209 for external washing and completes the adjustment of the liquid amount (Step S308). The controller 118 stores the degree of opening of the electromagnetic valve 209 for external washing when the liquid level detecting device 210 is turned on, specifically, the current value applied to the electromagnetic valve 209 for external washing at this time in a memory. After that, the controller 118 returns the height of the tip end of the sample dispensing probe 111b to the reference washing position 401 (Step S309), and transitions the sample dispensing mechanism to a standby state (Step S310).

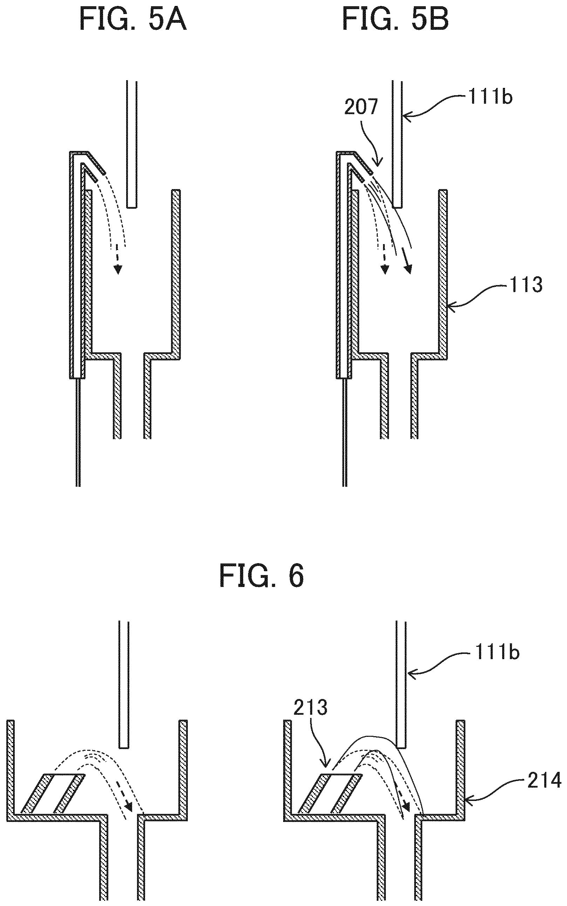

FIG. 5 is diagrams showing changes in the trace of the washing fluid at the time when the controller 118 retains the tip end of the sample dispensing probe 111b at the washing fluid amount confirming position 403 and adjusts the liquid amount of the washing fluid. In Step S306 described above, FIG. 5A shows the state where the controller 118 slightly opens the electromagnetic valve 209 for external washing from the state where the electromagnetic valve 209 for external washing is fully closed, and FIG. 5B shows the state where the degree of opening is further increased to contact the washing fluid with the tip end of the sample dispensing probe 111b. An increase in the degree of opening increases the liquid amount of the washing fluid per unit time discharged from the tip end of the sample dispensing probe 111b, and the discharge orientation of the washing fluid discharged from the washing fluid discharge port 207 changes as shown in FIG. 5B. As described above, when the washing fluid can be detected in the state where the tip end of the sample dispensing probe 111b is located at the washing fluid amount confirming position 403, it can be assured that the wash water contacts the highest place in the targeted washing range 402 even in the case where the tip end of the sample dispensing probe 111b is located at the reference washing position 401. Moreover, supposing that the degree of opening gradually increases from the state where the electromagnetic valve 209 for external washing is fully closed, the degree of opening at the time point at which the liquid level detecting device 210 begins to detect the washing fluid is stored, and the subsequent washing operation and later is performed at this degree of opening, washing can be performed with a liquid amount in a minimum necessary amount. In other words, adjustment is performed such that the degree of opening of the electromagnetic valve 209 for external washing achieves a minimum necessary amount, the washing fluid amount at the degree of opening after adjusted is set to a liquid amount after adjusted to update the reference solution amount, and this brings the effect of suppressing that a water droplet remains at the tip end of the sample dispensing probe 111b.

Moreover, the electromagnetic valve 209 for external washing that adjusts the washing fluid amount and the solenoid valve for turning on and off that finishes washing are provided in series, and thus it is possible to turn on the solenoid valve for turning on and off in the state of the degree of opening after adjusted for supplying the washing fluid. As a result, the waste of the washing fluid carried from the fully closed electromagnetic valve 209 for external washing to the degree of opening after adjusted.

Note that in the present embodiment, an example is taken and described in which the washing fluid discharge port 207 is provided on the upper part of the washing chamber 113 and the washing fluid is discharged from above toward obliquely below. However, as shown in FIG. 6, it is possible to adjust the liquid amount of the washing fluid by a similar method even in a configuration in which the washing fluid discharge port 213 is provided on the lower part of the washing tank 214 and the washing fluid is discharged from below toward diagonally above.

### Embodiment 2

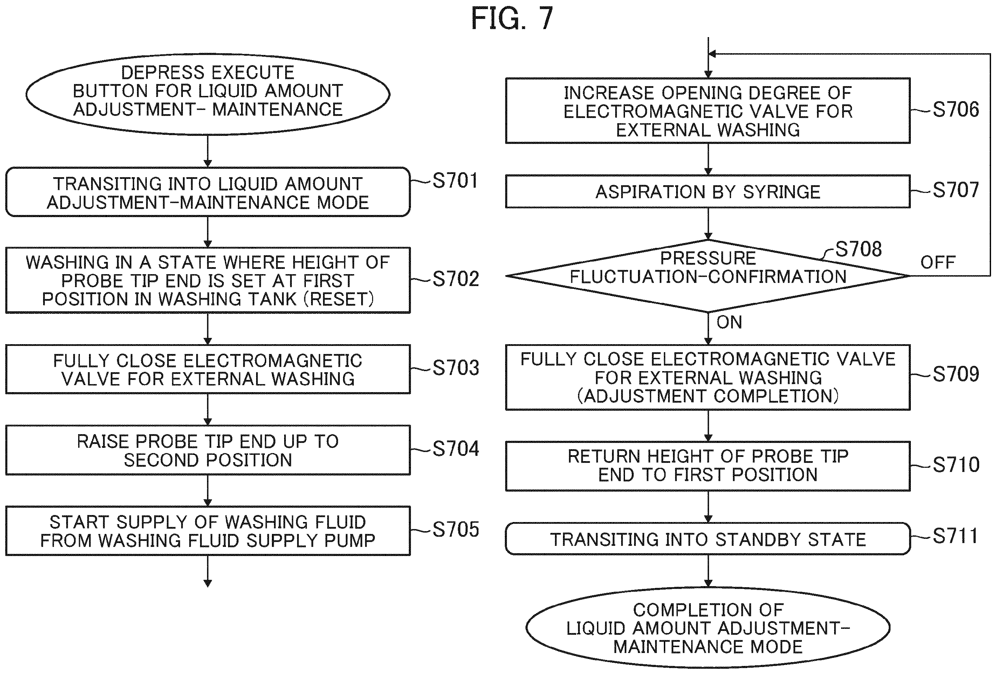

FIG. 7 is a flowchart showing an adjusting method of a liquid amount in an embodiment 2. In the embodiment 1 described above, the liquid level detecting device 210 is used as the washing fluid detecting unit. The present embodiment is different in that a pressure sensor 204 is used.

First, when a button for executing maintenance that adjusts a washing fluid amount is depressed, the mode transitions to maintenance mode (Step S701).

A controller 118 then retains a state where the height of the tip end of a sample dispensing probe 111b is at a reference washing position (first position) 401, and washes a sample dispensing probe 111b (Step S702).

Subsequently, the controller 118 fully closes an electromagnetic valve 209 for external washing (Step S703). Note that Step S703 may be provided after S704, described later. The description is similar to that of the embodiment 1, and the detailed description is omitted.

The controller 118 raises the tip end of the sample dispensing probe 111b to the washing fluid amount confirming position (second position) 403 (Step S704).

After that, the supply of the washing fluid the washing fluid supply pump 208 is started (Step S705). Furthermore, the controller 118 gradually increases the degree of opening of the electromagnetic valve 209 for external washing (Step S706), and performs aspiration with a syringe (Step S707), and acquires pressure data. Although aspiration with the syringe may be performed intermittently, continuous aspiration is desirable because adjustment time can be shortened. The degree of opening of the electromagnetic valve 209 for external washing is increased until the pressure sensor 204 as the washing fluid detecting unit confirms fluctuation (increase) in pressure data (Step S708).

When the presence of the washing fluid at the tip end of the sample dispensing probe 111b is detected and the pressure sensor 204 is turned on, the controller 118 fully closes the electromagnetic valve 209 for external washing, stops aspiration with the syringe, and completes the adjustment of the liquid amount (Step S709). After that, the controller 118 returns the height of the tip end of the sample dispensing probe 111b to the reference washing position 401 (Step S710), and transitions the sample dispensing mechanism to a standby state (Step S711).

According to the embodiment 1 and the embodiment 2, the liquid level detecting device 210 or the pressure sensor 204 already equipped on the dispensing mechanism is used, and thus the adjustment of the liquid amount is feasible without using a special device. Moreover, the washing fluid amount confirming position is set at the height equal to or higher than the second position, and thus it is possible to adjust the liquid amount such that the washing fluid reliably contacts the outer surface from the tip end of the sample dispensing probe 111b to a desired height, and it is possible to suppress the degradation of dispensing accuracy due to a shortage of washing. Furthermore, the degree of opening of the electromagnetic valve 209 for external washing is gradually increased, the degree of opening at the time point of starting detecting the washing fluid is set as the degree of opening after adjusted to update the reference degree of opening, and the subsequent washing operation and later is performed at this reference degree of opening, and thus it is possible to perform washing in a liquid amount in a minimum necessary amount.

Moreover, in the case where the washing fluid detecting unit does not detect the washing fluid even though the washing fluid amount reaches a predetermined upper limit, or in the case where the washing fluid detecting unit detects the washing fluid before the washing fluid amount reaches a predetermined lower limit, it is thought that the operation situations of the washing fluid supply pump 208 or the height or the like of the sample dispensing probe 111b has a problem. Therefore, in the case where no washing fluid is detected even the degree of opening of the electromagnetic valve 209 for external washing reaches a predetermined upper limit or in the case where the washing fluid is detected before the degree of opening of the electromagnetic valve 209 for external washing reaches a predetermined lower limit, the liquid amount adjustment maintenance mode may be retried. Furthermore, in such a case, the controller 118 may give an alarm to urge an operator to conform the washing fluid supply pump 208 or the sample dispensing probe 111b.

Note that in the foregoing embodiments 1 and 2, the case is described where the washing fluid amount is adjusted to the sample dispensing probe 111b. However, it is possible to apply the case to the case where the washing fluid amount to the reagent dispensing probe 120 is adjusted. Moreover, in the foregoing embodiments 1 and 2, the case is described where the adjustment of the washing fluid amount is executed as the maintenance mode of the automatic analyzer 100. However, the case may be the case where the mode is executed as initialization before performing analysis, at the time of starting the device, and the like. Furthermore, in the foregoing embodiments 1 and 2, the washing fluid amount is adjusted the degree of opening of the electromagnetic valve 209 for external washing. However, adjustment may be performed according to the number of revolutions of the washing fluid supply pump 208. It is possible to increase the discharge amount of the washing fluid per unit time by increasing the number of revolutions increases, or it is possible to decrease the discharge amount by decreasing the number of revolutions decreases. In this case, it is possible to achieve similar things by changing from the state where the number of revolutions is low to the state where the number of revolutions is high. As described above, the adjustment of the washing fluid amount includes the adjustment of the number of revolutions of water pressure by changing the washing fluid supply pump 208. In addition, another device may be provided as long as this device can adjust the liquid amount per unit time discharged from the tip end of the sample dispensing probe 111b.

Moreover, the washing fluid amount confirming position 403 does not necessarily have to be completely the same as the second position. For example, the washing fluid amount confirming position 403 may be raised slightly higher than the second position. Even though the position is placed higher than the second position, it is assured that the liquid amount of the washing fluid is sufficient as long as it is confirmed that the washing fluid is reached. However, when the liquid amount of the washing fluid is too much, the washing fluid might remain at the tip end of the dispensing probe, and the washing fluid amount confirming position 403 does not has to be raised higher than the second position so much.

### Embodiment 3

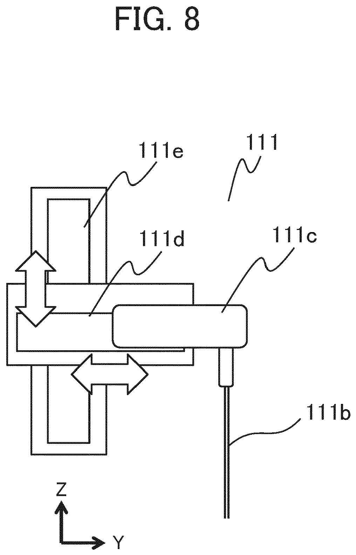

Next, the configuration of a sample dispensing mechanism according to an embodiment 3 will be described with reference to FIG. 8. Note that FIG. 8 shows the configuration of a first sample dispensing mechanism 111, and a second sample dispensing mechanism 111a also has a similar configuration. As shown in FIG. 8, the sample dispensing mechanism includes a sample dispensing arm 111c having a sample dispensing probe 111b at its tip end, a horizontal displacement mechanism 111d that horizontally moves the sample dispensing arm 111c in the horizontal direction, a perpendicular displacement mechanism 111e that moves the sample dispensing arm 111c in the vertical direction (Z-direction), and a rotational movement mechanism (not shown) that rotates the sample dispensing arm 111c. The sample dispensing mechanism moves the sample dispensing probe 111b from a sample vessel 115 to an aspiration position at which a sample is aspirated, to the discharge position at which the aspirated sample is discharged into a reaction container 102, and to a washing position at which the tip end of the sample dispensing probe 111b is washed in a washing chamber 113 with these moving mechanisms. Moreover, at the aspiration position, the discharge position, and the washing position, the sample dispensing mechanism lowers the sample dispensing probe 111b (Z-direction) corresponding to the heights of the sample vessel 115, the reaction container 102, and the washing chamber 113.

Note that in the present embodiment, the description will be made taking an example of washing the sample dispensing probe 111b, and the case of a reagent dispensing probe is also similarly applicable. Moreover, the present embodiment is also applicable to a device that dispenses a sample and a reagent with one probe.

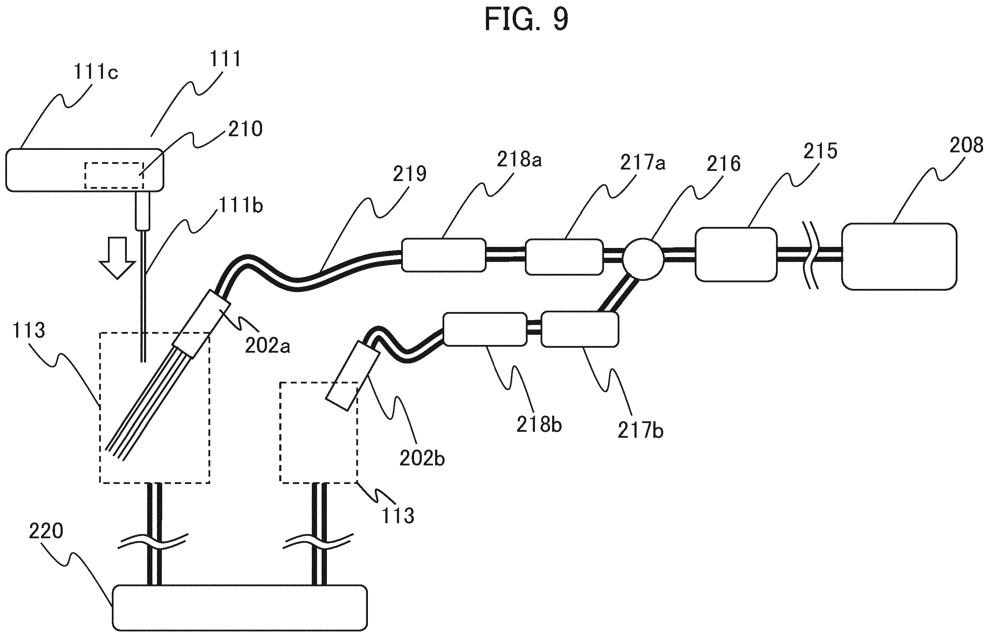

FIG. 9 is a diagram showing an example configuration of a washing fluid amount adjusting unit of the sample dispensing probe 111b. As shown in FIG. 9, the washing fluid amount adjusting unit includes a washing fluid supply pump 208 that supplies a washing fluid from a pure water facility (not shown), a proportional valve 215 that is capable of changing open and close states with a control electric current, a branch pipe 216, solenoid valves 217a and 217b that turn on and off liquid transfer by open and close control, regulating valves 218a and 218b that are capable of adjusting a flow rate by open and close operation (the screw of the valve is manually rotated), washing nozzles 202a and 202b that discharge the washing fluid, a waste fluid tank 220 that stores a waste fluid in the washing chamber 113, and a passage 219 that connects components to components. Moreover, in the sample dispensing arm 111c of the sample dispensing mechanism, a liquid level detecting device 210 (e.g., an electrostatic capacitance sensor) is equipped.

In washing the sample dispensing probe 111b, the washing fluid transferred from the washing fluid supply pump 208 by opening the solenoid valves 217a and 217b is discharged from the washing nozzles 202a and 202b, liquid currents from the washing nozzles 202a and 202b contact the outer surface of the sample dispensing probe 111b, and thus attached to the outer surface of the sample dispensing probe 111b are removed.

In the present embodiment, an example is shown in which one proportional valve 215 adjusts washing fluid amounts from two washing nozzles 202a and 202b. Adjustment is also possible in which one proportional valve 215 adjusts liquid amounts of three washing nozzles or more. Furthermore, the washing nozzles may be individually connected to one proportional valve for control. In the case where one proportional valve 215 adjusts the liquid amounts of a plurality of washing nozzles 202a and 202b, desirably, the regulating valves 218a and 218b may adjust liquid amounts beforehand such that liquid amounts from the washing nozzles 202a and 202b are almost the same.

Since the discharge ports of the tip ends of the washing nozzles 202a and 202b are opened, air sometimes enters the washing nozzles 202a and 202b side of the passage 219 immediately after the start of discharging the washing fluid, and water sometimes splashes. Because of this, in order to avoid erroneous detection of the liquid level detecting device 210, desirably, the order is set in which the discharge of the washing fluid is started from the washing nozzles 202a and 202b and then lowering the sample dispensing probe 111b is started.

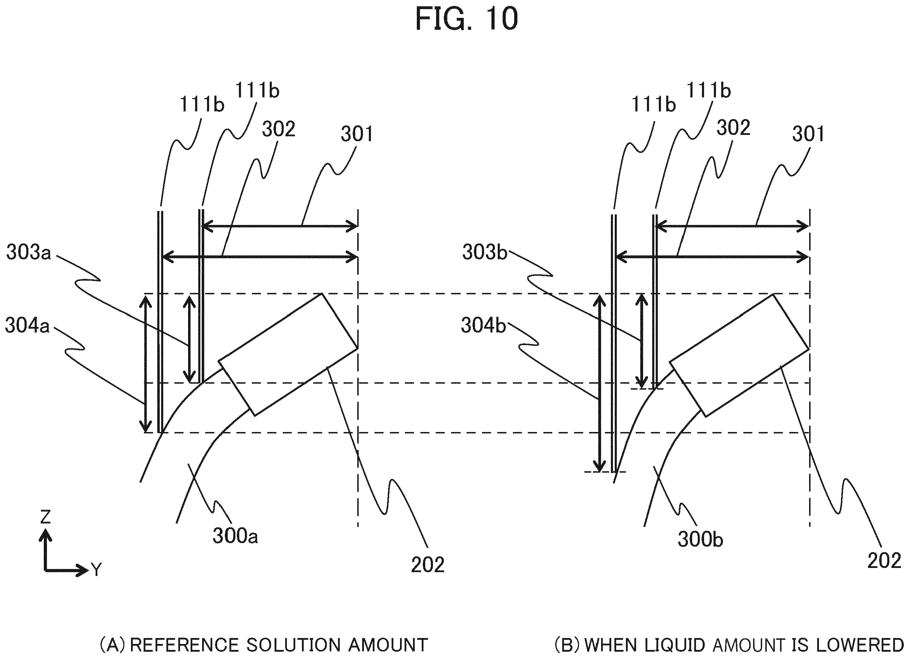

FIG. 10 is a diagram showing examples of the descending position of the sample dispensing probe 111b in the embodiment 3. Moreover, FIG. 10A shows a liquid current state in the case where discharge is performed in a reference solution amount when the sample dispensing probe 111b is washed, and FIG. 10B shows a liquid current state in the case where the liquid amount is decreased from the reference solution amount. Furthermore, in FIG. 10, a horizontal position at the time of washing the sample dispensing probe 111b is indicated by a washing position 301, and the horizontal position of the sample dispensing probe 111b at the time of confirming the liquid amount of the washing fluid is indicated by a liquid amount confirming position 302.

As shown in FIG. 10, a control unit compares the position between the time of confirming the liquid amount of the washing fluid with the time of washing the sample dispensing probe 111b, and the horizontal position of the sample dispensing probe 111b is positioned on the downstream side to the washing nozzle 202. In other words, the control unit compares the position between the time of confirming the liquid amount and the time of washing (at the time of analysis), and lowers the sample dispensing probe 111b at a place away from the discharge port of the washing nozzle 202. Note that in the following description, an example will be described in which one liquid amount confirming position 302 is provided. However, the liquid amount confirming position 302 may be provided at two places or more. Note that desirably, the liquid amount confirming position 302 may be away from the washing position 301 at the horizontal distance five times the diameter of the washing nozzle 202 or more.

The liquid current obliquely discharged from the washing nozzle 202 has a small change in the top end position of a washing fluid current 300 on the side close to the washing nozzle 202, and the difference of the detection height of the top end position of the washing fluid current at a washing position 301 between the reference solution amount (303a) and the liquid amount when decreased (303b) is small. However, at a place away from the washing nozzle 202, a change in the top end position of the washing fluid current 300 is large, and the difference of the detection height of the top end position of the washing fluid current at a liquid amount confirming position 302 between the reference solution amount (304a) and the liquid amount when decreased (304b) is large. Therefore, when the top end position of the washing fluid current is detected at the liquid amount confirming position 302 away from the washing nozzle 202, a change in the wash water amount can be more easily detected, and detection sensitivity is improved. Note that in regard to the orientation of the washing fluid discharged from the washing nozzle 202, the liquid current describes a parabola due to gravity even in the case where the washing fluid is obliquely discharged from below to above, and thus the orientation does not necessarily have to be the same orientation in FIG. 10.

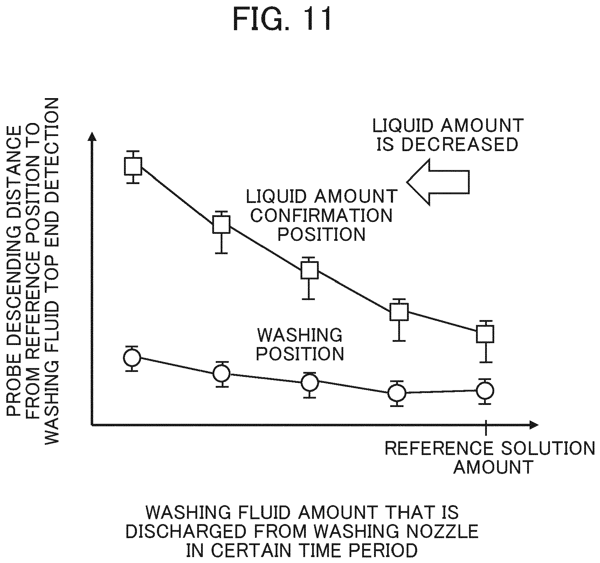

FIG. 11 is a graph showing the relationship between a washing fluid amount discharged from a washing nozzle within a certain time period and a probe descending distance from a reference position to detection of a washing fluid top end. As shown in FIG. 11, in regard to the difference between the probe descending distance in the reference solution amount and the probe descending distance in the liquid amount when decreased, a change in the value at the liquid amount confirming position 302 is larger than the value at the washing position 301.

Here, the shape of the liquid current becomes more unstable on the downstream side of the washing fluid current, and a spray (scatter) of the washing fluid is also more easily generated. Consequently, variations in the descending distance of the sample dispensing probe 111b (the detection position) sometimes become large. Therefore, at the time of confirming the liquid amount of the washing fluid, the control unit in the present embodiment slows the speed at which the sample dispensing probe 111b is lowered slower than the speed at which the sample dispensing probe 111b is lowered at the time of washing. As described above, the descending speed of the sample dispensing probe 111b is slowed slower than the descending speed at the time of washing, and thus the possibility that the liquid level detecting device 210 erroneously detects a contact detection signal with the washing fluid is reduced, and variations in the detection position are suppressed.

A typical automatic analyzer includes an analysis operation that performs component analysis and a reset operation (or maintenance operation) that initializes the analyzer prior to the analysis operation. In the present embodiment, the washing position 301 is used in the analysis operation and the reset operation, and the liquid amount confirming position 302 is used only in the reset operation. Since the analysis operation is required to process a large number of samples for a short time, the sample dispensing probe 111b is washed also for a short time, and desirably, the top end position of the washing fluid current is not varied. Consequently, at the time of the analysis operation, washing is performed at the washing position 301 at which a change in the top end position of the washing fluid current is small, and at the time of adjusting the washing fluid amount in the reset operation the washing fluid amount is measured, the top end position of the washing fluid current is measured at the liquid amount confirming position 302 at which a change in the top end position of the washing fluid current is large. Thus, at the time of washing, variations in the washing range are suppressed, and at the time of confirming the liquid amount, and it is possible to easily detect a change in the washing fluid amount.

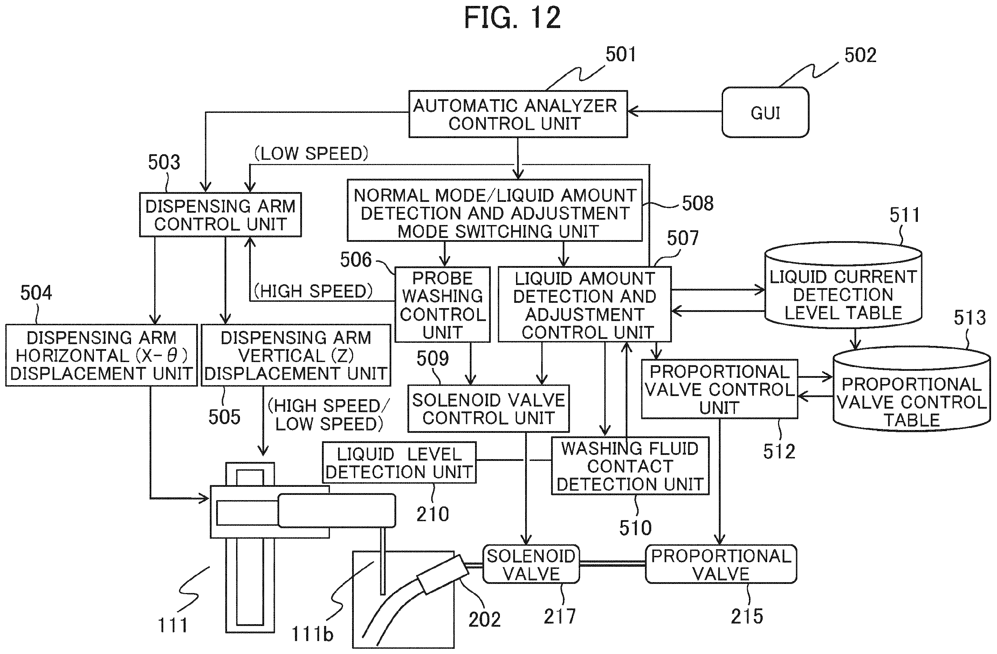

FIG. 12 is a diagram showing an example configuration of a control block for probe washing and probe washing fluid amount adjustment. An automatic analyzer control unit 501 is a central processing unit that controls the analyzer overall, and receives an instruction command such as an inspection command from a user through a GUI 502. The dispensing mechanism positions the dispensing probe with instructions from a dispensing arm control unit 503 to a dispensing arm horizontal displacement unit 504 or to a dispensing arm vertical displacement unit 505.

In the operation at the time of analysis, the dispensing probe is moved to the washing position 301 with an instruction from the probe washing control unit 506 to perform the washing process, and in the operation at the time of adjusting the washing fluid amount, the dispensing probe is moved to the liquid amount confirming position 302 with an instruction from a liquid amount detection and adjustment control unit 507 to perform the detection process of the liquid amount. Note that since high speed processing has to be performed at the time of analysis, the dispensing arm vertical displacement unit 505 switches the speed such that high speed movement is performed at the time of analysis and low speed movement is performed at the time of adjusting the washing fluid amount (the top end position of the washing fluid current is detected by the liquid level detecting device). Switching between the time of analysis and the time of adjusting the liquid amount is performed by a normal washing mode/liquid amount detection and adjustment mode switching unit 508.

Opening and closing the solenoid valve 217 for the discharge of the washing fluid is performed by a solenoid valve control unit 509, and the wash water is discharged at a given time at the time of washing the probe or at the time of detecting and adjusting the liquid amount. As described above, at the time of detecting the liquid amount, the dispensing probe is lowered from above at low speed, and a contact with the washing fluid is detected by the liquid level detecting device 210. The detection signal is stored in a liquid current detection amount table 511 through a washing fluid contact detection unit 510 (the process content will be described later) and the liquid amount detection and adjustment control unit 507. The liquid amount detection and adjustment control unit 507 determines the necessity of controlling the proportional valve 215 or the control amount based on information stored in the liquid current detection amount table 511. The open and close states of the proportional valve 215 are controlled due to a change in the control electric current from a proportional valve control unit 512. The control electric current at the time of controlling the proportional valve 215 and information on the detection height of the liquid current measured at that time are managed by a proportional valve control table 513. The control electric current and the information are made referenced at the time of controlling the proportional valve 215 subsequently and later, and thus it is possible to achieve the washing fluid amount to a targeted state with a much smaller number of operations.

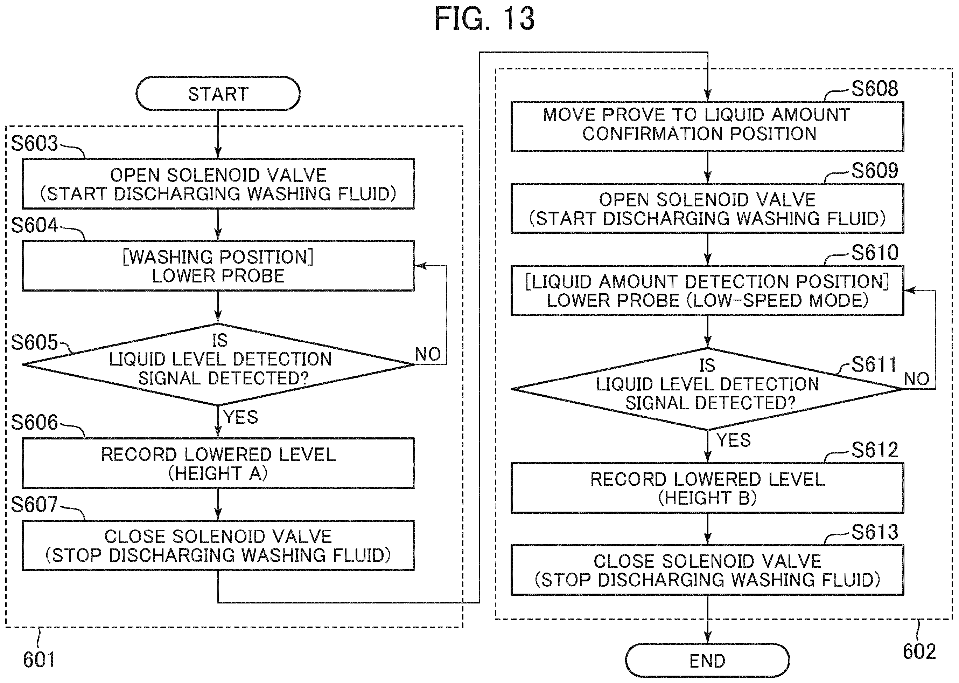

FIG. 13 is a flowchart showing the operation of the washing fluid amount adjusting unit in confirming the washing fluid amount. Note that although omitted in FIG. 13, after the descending operation of the dispensing probe is finished, an operation of raising the dispensing probe and returning the dispensing probe to the original position is inserted. As shown in FIG. 7, the confirming operation of the washing fluid amount includes a confirmation process for washing state 601 and a confirmation process for presence or absence of liquid amount adjustment 602.

Here, the confirmation process for washing state 601 will be described. The confirmation process for washing state 601 is performed at the washing position 301 used at the time of the analysis operation. Since the washing position 301 has a small change in the top end position of the washing fluid current sue to a change in the liquid current as described above, the position is used for confirming descending control of the dispensing probe, not for adjusting the liquid current.

FIG. 13 shows the process after the dispensing probe is moved to above the washing position 301. First, the opening operation of the solenoid valve 217 starts the discharge of the washing fluid (S603). After that, the dispensing probe starts descending (S604). The descending operation of the dispensing probe is performed until a liquid level detection signal is detected (S605). After the liquid level detection signal is detected, the detection height of the liquid current of the washing fluid current (the height A) is recorded in the liquid current detection amount table 511 (S606). The solenoid valve 217 is then closed (S607).

With the operation described above, it is possible to confirm the lowering amount necessary to wash the dispensing probe at the time of the analysis operation. Since the dispensing probe is a component periodically replaced, the positional relationship between the dispensing probe and the washing fluid current after replacement might be displaced. Consequently, desirably, the washing range is confirmed by the confirmation process for washing state 601.

After the replacement of the dispensing probe, the lowering amount of the dispensing probe is confirmed at the washing position 301 with small variations, and thus it is possible to confirm a change in the lowering amount due to the individual difference of the dispensing probe. With the use of the difference in the lowering amount sue to the individual difference of the confirmed dispensing probe, the value of the lowering amount in the liquid current detection amount table 511 or the proportional valve control table 513 is corrected, and thus it is possible to reduce measurement displacement that is possibly generated before and after the replacement of the dispensing probe.

Next, the confirmation process for presence or absence of liquid amount adjustment 602 will be described. In the confirmation process for presence or absence of liquid amount adjustment 602, first, the washing position 301 is moved to the liquid amount confirming position 302 (S608). After that, the opening operation of the solenoid valve 217 starts the discharge of the washing fluid (S609). After that, the dispensing probe is lowered (S610). The descending speed of the dispensing probe at this time is more slowed than the descending speed of the dispensing probe in the washing operation at the time of analysis. Lowering the dispensing probe at low speed suppresses erroneous detection of the contact detection signal with the washing fluid by the liquid level detecting device 210, and it is possible to reduce variations in detection of the top end position of the washing fluid. The descending operation of the dispensing probe is performed until the liquid level detection signal is detected (S611). After the detection of the liquid level detection signal, the detection height of the liquid current of the washing fluid current (height B) is recorded in the liquid current detection amount table 511 (S612). The solenoid valve 217 is then closed (S613).

In the case where the difference between the recorded value of the height A and the design value is large, correction of adjustment of the position of the dispensing probe or the descending distance is necessary. In the case where the difference between the recorded value of the height B and the design value is large, it is determined that the adjustment of the liquid amount is necessary. Note that a flow may be adopted in which the confirmation process for washing state 601 is omitted and only the confirmation process for presence or absence of liquid amount adjustment 602 is performed.

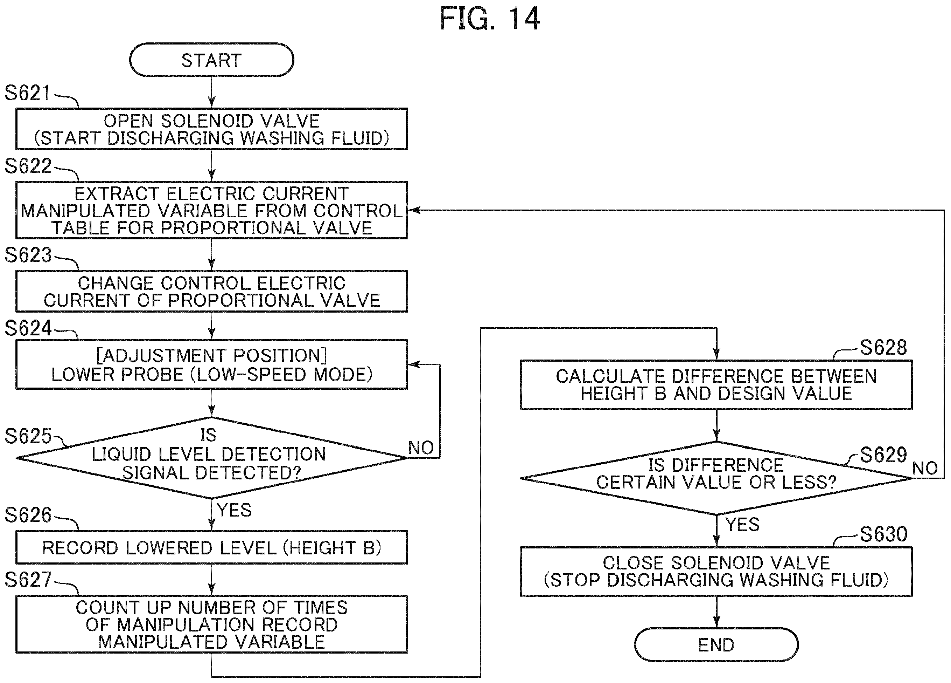

Next, FIG. 14 is a flowchart showing a liquid amount adjustment operation by the proportional valve 215. Note that also in FIG. 14, after the descending operation of the dispensing probe is finished, the operation in which the dispensing probe is raised to return at the original position is omitted.

In the case where confirmation is necessary in the confirmation process for presence or absence of liquid amount adjustment 602, the proportional valve 215 is operated. Since the operation of the proportional valve 215 is performed after the confirmation process for presence or absence of liquid amount adjustment 602, the dispensing probe is at the liquid amount confirming position 302. First, the opening operation of the solenoid valve 217 starts the discharge of the washing fluid (S621). After that, an electric current manipulated variable is extracted from the proportional valve 215 control table 513 (S622). Based on this electric current manipulated variable, the control electric current of the proportional valve 215 is changed (S623). After changing the control electric current of the proportional valve 215, the liquid amount of the washing fluid is changed. Therefore, in order to confirm a change in the liquid amount of the washing fluid, first, the dispensing probe is lowered (S624). Subsequently, when the liquid level detection signal is detected (S625), the descending height of the dispensing probe is recorded (S626). After the operation of the proportional valve 215, the number of times of manipulation (including a count-up process) and the manipulated variable (current value) are recorded (S627). After that, the difference between the recorded height B and the design value is calculated (S628), and it is determined whether the difference is a certain value or less (S629). In the case where the difference is larger than the certain value, Steps S622 to S628 are repeated, and thus adjustment is achieved such that the liquid level of the washing fluid current falls in the certain value of the design value. After the adjustment the solenoid valve 217 is closed (S630). In addition, the counter value of the number of times of manipulation is cleared, and the dispensing probe is moved to the initial position.

The counter for the number of times of manipulation is provided as a process of avoiding inability of manipulation preparing an abnormality state where the washing fluid current is not adjustable within the design value even a certain number of manipulations or more. In the actual process, a process is also provided in which the value of the counter for the number of times of manipulation is confirmed to come out of a repeating loop at the certain value or more. Moreover, the manipulated variable of the proportional valve 215 can be adjusted to a target liquid amount at a smaller number of times by recording what degree the top end position of the washing fluid current is changed by manipulation every time and reference is made at the time of operating the proportional valve 215 subsequently and later. Furthermore, a configuration may be provided in which the current value of the recorded proportional valve 215 and the amount of a change in the top end position of the washing fluid current are input to a PID controller and the manipulated variable of the proportional valve 215 is controlled by the PID controller.

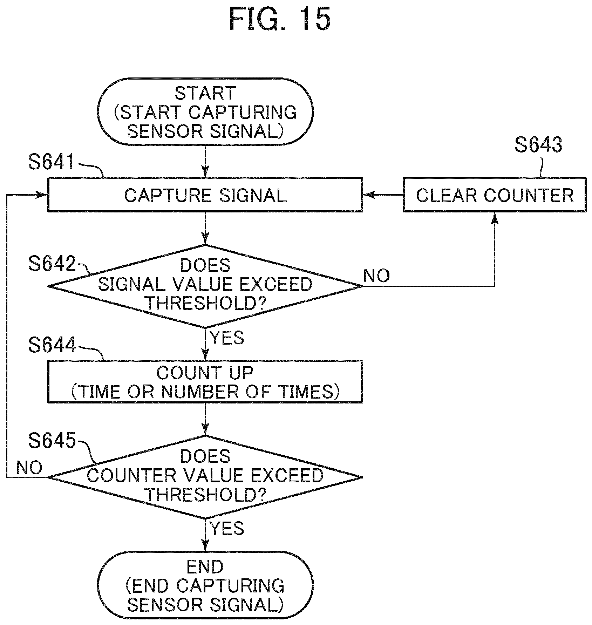

FIG. 15 is a flowchart showing the operation of washing fluid amount detection. The confirmation of the washing fluid amount and the detection of the liquid amount in the operation of the proportional valve 215 are performed as follows.

First, a signal from the liquid level detecting device 210 is taken (S641), and it is determined whether the size of the taken signal is a threshold or more (the level at which the contact with the liquid level can be determined) (S642). In the case where the size of the taken signal is less than the threshold, the counter is cleared (S643). In the case where the size of the taken signal is the threshold or more, the counter is count-up (S644). This counter is used for determining whether a signal exceeding the threshold is continuously obtained, and the number of times of count or time for continuous detection is recorded. Depending on the determination whether the counter value exceeds the threshold, taking signals is repeated until the counter value exceeds the threshold.

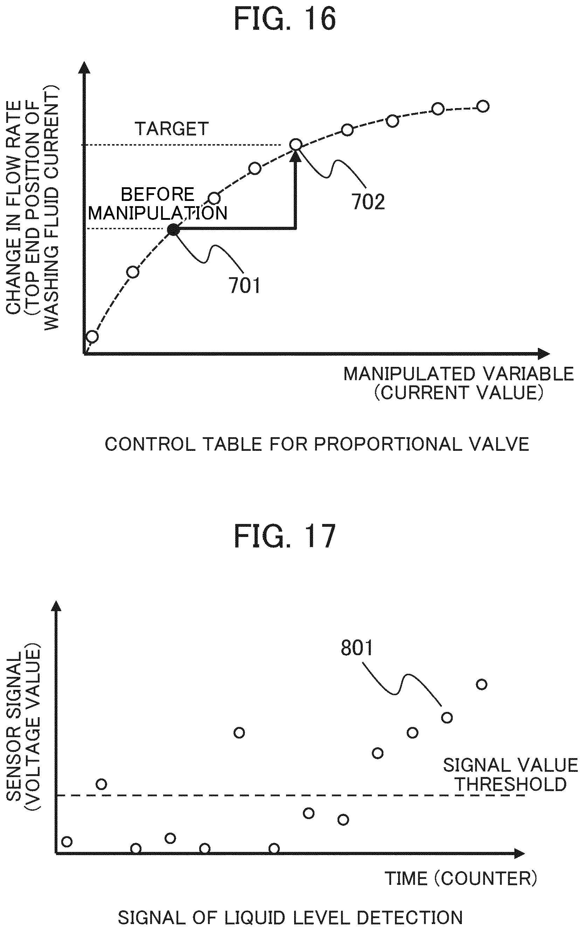

FIG. 16 is a diagram showing an example of the relationship between the manipulated variable of the proportional valve 215 (the current value) recorded in the proportional valve control table 513 and a change in the liquid amount of the washing fluid (the top end position of the washing fluid current). From information obtained in the above-described confirming operation of the washing fluid amount or at the time of the liquid amount adjustment operation by the proportional valve 215, the relationship between the manipulated variable of the proportional valve 215 and the liquid level the position is known. The operation of the proportional valve 215 is performed based on this relationship, and adjustment is feasible for a short time from a state 701 before manipulation to a target state 702. The proportional valve control table 513 is updated every confirmation of the liquid amount, and thus a change in characteristics (the relationship between the manipulated variable and the flow rate) due to the state of the passage is also updated.

FIG. 17 is a diagram showing an example of the liquid level detection signal in the operation flow of the liquid current detection. The horizontal axis expresses time, and the vertical axis expresses a sensor signal (voltage value) obtained from the liquid level detecting device 210. When the dispensing probe comes close to near the liquid current, a signal that exceeds the threshold of a signal level due to signal noise and the like. In order to avoid erroneous detection due to signal noise, in the operation flow of the liquid current detection of the present embodiment, a counter for the number of times exceeding the threshold of the signal level (or time) is provided. Counting is continuously made at a plurality of times, it is determined that a contact with the washing fluid is detected. For example, in the case where the threshold of the counter is set to three, the detection of the liquid level is determined at a point of detecting a value 801 exceeding the threshold continuously for three times as shown in FIG. 17, and it is possible to prevent erroneous detection due to signal noise.

As described above, according to the present embodiment, a change in the washing fluid amount is detected of high sensitivity at the time of confirming the liquid amount while suppressing variations in the washing range at the time of washing, and thus it is possible to achieve an automatic analyzer that improves the accuracy of the adjustment of the washing fluid amount.

### Embodiment 4

In order to reduce variations at the time of detecting the top end position of the washing fluid, in an embodiment 4, the shape of a washing fluid current is stabilized by control of a proportional valve 215, and then the top end position of the washing fluid current is detected.

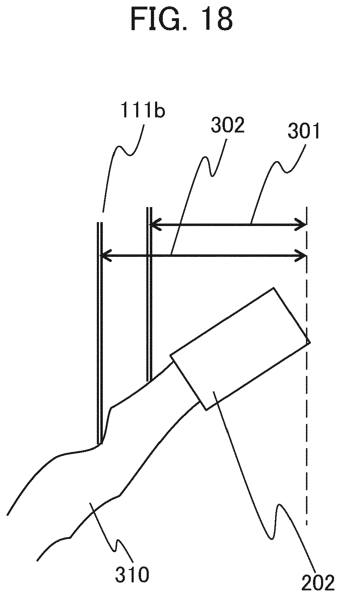

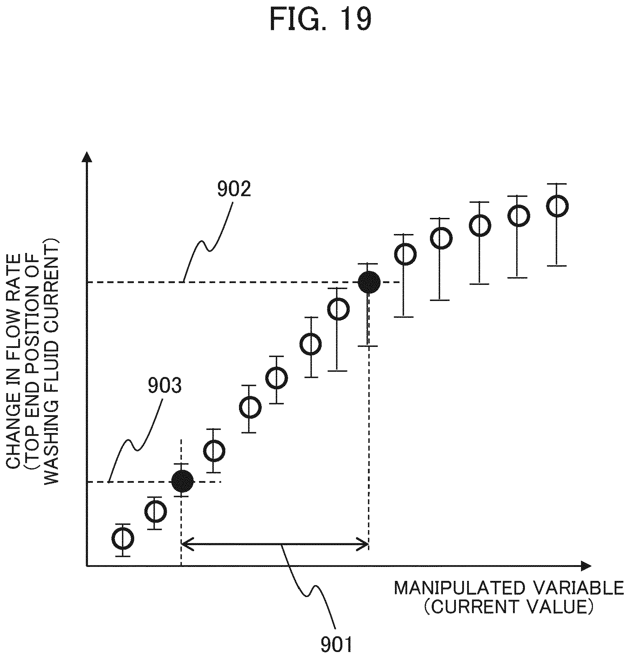

FIG. 18 is a diagram showing an example of a liquid current state where the flow rate of the washing fluid current is fast and the descending position of a sample dispensing probe 111b. FIG. 19 is a diagram showing the relationship between the manipulated variable (electric current) of the proportional valve 215 and a change in the flow rate (the top end position of the washing fluid current). Although the device configuration of the embodiment 4 is the same as the embodiment 3, the confirming operation of the washing fluid amount is different.

Depending on the shape of a washing nozzle 202 or the design of the passage, the flow rate of the washing fluid current is fast, and this sometimes leads to the case where the shape of the liquid current is unstable as shown in FIG. 18. In the state where the shape of the liquid current is unstable, the height of the liquid level is sometimes detected lower than the average position of the height of the liquid level depending on the descending timing of the dispensing probe. In the case where the installation angle of the washing nozzle 202 is inclined or in the case where a washing position 301 is located away from the washing nozzle 202, the shape of the liquid current describes a parabola, and irregularities of the liquid current are prone to be concave (low) below the reference (the stable top end of the washing fluid).

In the present embodiment, the flow rate of the washing fluid is more slowed than the flow rate at the time of washing, and thus the shape of the liquid current at the time of confirming the liquid amount is stabilized. In order to slow the flow rate, the control electric current of the proportional valve 215 only has to be decreased. A manipulation is performed in which the current value is decreased by a certain amount from the manipulated variable (current value) at the time of washing presently set. In the state where the flow rate of the washing fluid current is slowed to stabilize the shape of the liquid current, the top end position of the washing fluid current is detected at a liquid amount confirming position 302, and thus it is possible to suppress erroneous detection due to the unstable shape of the liquid current.

The height of the liquid level of the liquid current at the time of washing can be estimated from an altered amount 901 of the electric current (the difference of a setting 902 at the time of washing from a setting 903 at the time of confirming the liquid amount). In the estimation of the height of the liquid level, it is desirable to prepare in advance a table that shows an amount of change in the height of the liquid level to the manipulated variable of the proportional valve 215. However, this table can also be produced after the shipment of the analyzer by measuring the top end position of the washing fluid current in multiple electric current states.

According to the present embodiment, even in the washing fluid current at fast flow rate, it is possible to keep the liquid current state at the time of washing constant with no influence of the shape of the liquid current. Note that the present embodiment may be used in combination of the embodiment 3. For example, in order to confirm the liquid current state after adjusted after finishing the adjustment of the flow rate in the embodiment 3, the electric current is decreased by a certain value from the control electric current of the proportional valve 215 after the adjustment of the liquid amount, and thus it is possible to confirm the liquid amount.

Note that in the embodiments 3 and 4, the liquid level detecting device 210 is used at the time of detecting the washing fluid amount. However, the liquid level detecting device 210 is not limited as long as one that can detect the washing fluid is used. For example, the washing fluid can be detected using a pressure sensor connected to the passage of the dispensing probe.

Moreover, in the embodiments 3 and 4, typical signal processing is also performed together, such as a process in which the height of the liquid level is detected for a plurality of times to average detected results (liquid level) or to remove an abnormal value (in the case where the difference from the measured value is large in electric current states before and after), and thus it is possible to improve detection accuracy. Furthermore, it is possible to implement the embodiments 3 and 4, regardless of the number of movable axes of the dispensing arm and the direction, as long as the dispensing probe can be moved to the positions by providing the washing position on the upstream side and the liquid amount confirming position on the downstream side in the axial direction of the washing fluid current.

### Reference Signs List

100: automatic analyzer
101: reaction disk
102: reaction container
103: washing mechanism
104: spectrophotometer
105: stirring mechanism
106: washing chamber (for stirring mechanism)
107: first reagent dispensing mechanism
107a: second reagent dispensing mechanism
108: washing chamber (for reagent dispensing mechanism)
109: reagent disk
110: reagent bottle
111: first sample dispensing mechanism
111a: second sample dispensing mechanism
111b: sample dispensing probe
111c: sample dispensing arm
111d: horizontal displacement mechanism
111e: perpendicular displacement mechanism
112: detergent bottle
113: washing chamber (for sample dispensing mechanism)
115: sample vessel
116: sample rack
117: sample transfer mechanism
118: controller
120: reagent dispensing probe
121: reagent syringe
122: sample syringe
202a, 202b: washing nozzle
203: nipple
204: pressure sensor
205: upper opening part
206: lower opening part
207: washing fluid discharge port
208: washing fluid supply pump
209: electromagnetic valve for external washing
210: liquid level detecting device
211: liquid transfer pump
212: electromagnetic valve for internal washing
231: washing fluid discharge port
214: washing tank (for sample dispensing mechanism)
215: proportional valve
216: branch pipe
217a, 217b: solenoid valve
218a, 218b: regulating valve
219: passage
220: waste fluid tank
300a, 300b: washing fluid current
301: washing position
302: liquid amount confirmation position
401: reference washing position
402: washing range
403: washing fluid amount confirming position
501: automatic analyzer control unit
502: GUI
503: dispensing arm control unit
504: dispensing arm horizontal displacement unit
505: dispensing arm vertical displacement unit
506: probe washing control unit
507: liquid amount detection and adjustment control unit
508: normal washing mode/liquid amount detection and adjustment mode switching unit
509: solenoid valve control unit
510: washing fluid contact detection unit
511: liquid current detection amount table
512: proportional valve control unit
513: proportional valve control table
601: confirmation process for washing state
602: confirmation process for presence or absence of liquid amount adjustment

## Claims

1. An automatic analyzer comprising:
a dispensing mechanism (111) including a dispensing probe (111b) dispensing a sample or reagent into a reaction container (102);
a discharge port (207) discharging washing fluid as a washing fluid current onto an external surface of the dispensing probe (111b);
a liquid amount changing unit (209) changing an amount per unit time of the washing fluid to be supplied to the dispensing probe (111b), wherein the discharge port (207) is configured such that the discharge orientation of the washing fluid current discharged from the washing fluid discharge port (207) changes with the liquid amount of the washing fluid per unit time discharged;
a washing fluid detecting unit (210) provided at the dispensing mechanism (111); and
a control section (118, 501) controlling the dispensing probe (111b), the liquid amount changing unit (209), and the washing fluid detecting unit (210),
at the time of washing the dispensing probe (111b), the control section (118, 501) allowing washing fluid of a reference liquid amount to be discharged from the discharge port (207) in a state of setting a height of a tip end of the dispensing probe (111b) at a reference washing position as a first position (401), to thereby bring the washing fluid into contact with an external surface of the dispensing probe (111b) that lies in a washing range (402) from the first position (401) to a second position (403) above the first position (401) as a target, wherein the washing fluid that has washed the outer surface of the sample dispensing probe (111b) and system water that has washed the inner surface of the sample dispensing probe (111b) are aspirated in a vacuum manner and removed;
**characterized in that,** at the time of adjusting washing fluid amount, the control section (118, 501) allows the washing fluid amount to be gradually increased by the liquid amount changing unit (209) in a state of making the height of the tip end of the dispensing probe (111b) higher than the second position (403), wherein the second position (403) is a washing fluid amount confirming position (403) and is the same as the highest position in the washing range (403), and regards a washing fluid amount at the time when the washing fluid detecting unit (210) detects the washing fluid current, as a post-adjusted liquid amount to renew the reference liquid amount.

2. The automatic analyzer according to claim 1, wherein
the liquid amount changing unit (209) is an electromagnetic valve provided in a course of a flow channel from a pump (208) to the discharge port (207),
at the time of washing the dispensing probe (111b), the control section (118, 501) controls the electromagnetic valve (209) into a reference opening degree to discharge the washing fluid from the discharge port (207), and
at the time of adjusting the washing fluid amount, the control section (118, 501) increases the opening degree of the electromagnetic valve (209), and renews the opening degree of the electromagnetic valve (20) at the time when the washing fluid detecting unit (210) starts to detect the washing fluid, as a post-adjusted reference opening degree.

3. The automatic analyzer according to claim 1 or 2,
wherein the washing fluid detecting unit (210) is a liquid level detection device detecting capacitance of the dispensing probe (111b) to detect a liquid level.

4. The automatic analyzer according to claim 1 or 2,
wherein the automatic analyzer comprises a syringe (121, 122) performing aspiration and discharge of the specimen or reagent, and a pressure sensor (204) provided in a flow channel connecting the syringe and the dispensing probe (111b), and the washing fluid detecting unit (210) is the pressure unit.

5. The automatic analyzer according to claim 1 or 2,
wherein, at the time of adjusting the washing fluid amount, the control section (118, 501) gives an alarm in a case where the washing fluid detecting unit (210) does not detect the washing fluid even if the washing fluid amount reaches a prescribed upper limit value or in a case where the washing fluid detecting unit (210) detects the washing fluid before the washing fluid amount reaches a prescribed lower limit value.

6. An automatic analyzer comprising:
a dispensing mechanism (111) including a dispensing probe (111b) configured to dispense a sample or reagent into a reaction container (102);
a washing fluid detecting unit (210)
a washing nozzle (202, 202a, 202b) configured to discharge a washing fluid current (300) to the dispensing probe (111b), wherein the washing fluid detecting unit (210) is configured to detect a top end position of the washing fluid current (300), wherein the washing nozzle (202, 202a, 202b) is configured such that the top end position of the washing fluid current (300) discharged from the nozzle changes with the liquid amount of the washing fluid per unit time discharged from the washing nozzle (202), wherein the washing fluid that has washed the outer surface of the sample dispensing probe (111b) and system water that has washed the inner surface of the sample dispensing probe (111b) is washed are aspirated in a vacuum manner and removed; and
a control unit (118, 501) configured to control the dispensing mechanism (111),
**characterized in that** in confirming a liquid amount of the washing fluid, the control unit (118, 501) positions a horizontal position of the dispensing probe (111b) on a more downstream side from the washing nozzle in comparison with a horizontal position of the dispensing probe (111b) in washing the dispensing probe (111b), and
in confirming the liquid amount of the washing fluid, the control unit (118, 501) lowers the dispensing probe (111b) and the control unit (118, 501) confirms the liquid amount of the washing fluid based on a height when the washing fluid detecting unit (210) detects the washing fluid current (202).

7. The automatic analyzer according to claim 6,
wherein in confirming the liquid amount of the washing fluid, the control unit (118, 501) slows speed at which the dispensing probe (111b) is lowered slower than speed at which the dispensing probe (111b) is lowered in washing the dispensing probe (111b).

8. The automatic analyzer according to claim 6,
wherein in confirming the liquid amount of the washing fluid, the control unit (118, 501) starts lowering the dispensing probe (111b) after starting discharge of the washing fluid from the washing nozzle (202a, 202b).

9. The automatic analyzer according to claim 8, comprising
a proportional valve (215) configured to adjust a liquid amount of the washing fluid,
wherein the control unit changes opening and closing states of the proportional valve (215) based on a height when the washing fluid detecting unit (210) detects the washing fluid.

10. The automatic analyzer according to claim 6,
wherein in confirming the liquid amount of the washing fluid, the control unit (118, 501) slows a flow rate of the washing fluid at which the washing fluid is discharged from the washing nozzle (202a, 202b) slower than a flow rate of the washing fluid at which the washing fluid is discharged from the washing nozzle (202a, 202b) in washing the dispensing probe (111b).

## Patentansprüche

1. Automatische Analysevorrichtung, umfassend:
einen Abgabemechanismus (111), der eine Abgabesonde (111b) umfasst, die eine Probe oder ein Reagenz in einen Reaktionsbehälter (102) abgibt;
eine Auslassöffnung (207), die Waschflüssigkeit als Waschflüssigkeitsstrom auf eine äußere Oberfläche der Abgabesonde (111b) abgibt;
eine Flüssigkeitsmengen-Änderungseinheit (209), die eine Menge pro Zeiteinheit der Waschflüssigkeit ändert, die der Abgabesonde (111b) zugeführt werden soll, wobei die Auslassöffnung (207) so konfiguriert ist, dass sich die Abgaberichtung des Waschflüssigkeitsstroms, der von der Waschflüssigkeits-Auslassöffnung (207) abgegeben wird, abhängig von der Flüssigkeitsmenge der pro Zeiteinheit abgegebenen Waschflüssigkeit ändert;
eine Waschflüssigkeitserfassungseinheit (210), die an dem Abgabemechanismus (111) vorgesehen ist; und
einen Steuerungsabschnitt (118, 501), der die Abgabesonde (111b), die Flüssigkeitsmengen-Änderungseinheit (209) und die Waschflüssigkeitserfassungseinheit (210) steuert,
wobei zum Zeitpunkt des Waschens der Abgabesonde (111b) der Steuerungsabschnitt (118, 501) ermöglicht, dass Waschflüssigkeit einer Referenzflüssigkeitsmenge von der Auslassöffnung (207) in einem Zustand abgegeben wird, in dem eine Höhe eines Spitzenendes der Abgabesonde (111b) an einer Referenzwaschposition als erste Position (401) als Ziel eingestellt ist, um dadurch die Waschflüssigkeit in Kontakt mit einer äußeren Oberfläche der Abgabesonde (111b) zu bringen, die sich in einem Waschbereich (402) von der ersten Position (401) zu einer zweiten Position (403) oberhalb der ersten Position (401) befindet,
wobei die Waschflüssigkeit, die die äußere Oberfläche der Probenabgabesonde (111b) gewaschen hat, und Systemwasser, das die innere Oberfläche der Probenabgabesonde (111b) gewaschen hat, durch Unterdruck abgesaugt und entfernt werden;
**dadurch gekennzeichnet, dass** der Steuerungsabschnitt (118, 501) zum Zeitpunkt des Einstellens der Waschflüssigkeitsmenge ermöglicht, dass die Waschflüssigkeitsmenge durch die Flüssigkeitsmengen-Änderungseinheit (209) schrittweise erhöht wird in einem Zustand, in dem die Höhe des Spitzenendes der Abgabesonde (111b) höher als die zweite Position (403) eingestellt wird, wobei die zweite Position (403) eine Waschflüssigkeitsmengen-Bestätigungsposition (403) ist und dieselbe wie die höchste Position in dem Waschbereich (403) ist, und eine Waschflüssigkeitsmenge zum Zeitpunkt, in dem die Waschflüssigkeitserfassungseinheit (210) den Waschflüssigkeitsstrom erfasst, als nachjustierte Flüssigkeitsmenge betrachtet, um die Referenzflüssigkeitsmenge zu erneuern.

2. Automatische Analysevorrichtung nach Anspruch 1, wobei
die Flüssigkeitsmengen-Änderungseinheit (209) ein elektromagnetisches Ventil ist, das in einem Verlauf eines Strömungskanals von einer Pumpe (208) zu der Auslassöffnung (207) vorgesehen ist,
zum Zeitpunkt des Waschens der Abgabesonde (111b) der Steuerungsabschnitt (118, 501) das elektromagnetische Ventil (209) auf einen Referenzöffnungsgrad steuert, um die Waschflüssigkeit von der Auslassöffnung (207) abzugeben, und
zum Zeitpunkt des Einstellens der Waschflüssigkeitsmenge der Steuerungsabschnitt (118, 501) den Öffnungsgrad des elektromagnetischen Ventils (209) erhöht und den Öffnungsgrad des elektromagnetischen Ventils (209) zum Zeitpunkt, wenn die Waschflüssigkeitserfassungseinheit (210) beginnt, die Waschflüssigkeit zu erfassen, als nachjustierten Referenzöffnungsgrad erneuert.

3. Automatische Analysevorrichtung nach Anspruch 1 oder 2, wobei die Waschflüssigkeitserfassungseinheit (210) eine Flüssigkeitspegel-Erfassungsvorrichtung ist, die eine Kapazität der Abgabesonde (111b) erfasst, um einen Flüssigkeitspegel zu erfassen.

4. Automatische Analysevorrichtung nach Anspruch 1 oder 2, wobei die automatische Analysevorrichtung eine Spritze (121, 122) umfasst, die ein Ansaugen und Abgeben der Probe oder des Reagenz durchführt, und einen Drucksensor (204), der in einem Strömungskanal vorgesehen ist, der die Spritze und die Abgabesonde (111b) verbindet, und wobei die Waschflüssigkeitserfassungseinheit (210) die Druckeinheit ist.

5. Automatische Analysevorrichtung nach Anspruch 1 oder 2, wobei zum Zeitpunkt des Einstellens der Waschflüssigkeitsmenge der Steuerungsabschnitt (118, 501) einen Alarm ausgibt in einem Fall, in dem die Waschflüssigkeitserfassungseinheit (210) die Waschflüssigkeit nicht erfasst, selbst wenn die Waschflüssigkeitsmenge einen vorgeschriebenen oberen Grenzwert erreicht, oder in einem Fall, in dem die Waschflüssigkeitserfassungseinheit (210) die Waschflüssigkeit erfasst, bevor die Waschflüssigkeitsmenge einen vorgeschriebenen unteren Grenzwert erreicht.

6. Automatische Analysevorrichtung, umfassend:
einen Abgabemechanismus (111), der eine Abgabesonde (111b) umfasst, die dazu ausgelegt ist, eine Probe oder ein Reagenz in einen Reaktionsbehälter (102) abzugeben;
eine Waschflüssigkeitserfassungseinheit (210);
eine Waschdüse (202, 202a, 202b), die dazu ausgelegt ist, einen Waschflüssigkeitsstrom (300) zu der Abgabesonde (111b) abzugeben, wobei die Waschflüssigkeitserfassungseinheit (210) konfiguriert ist, eine obere Endposition des Waschflüssigkeitsstroms (300) zu erfassen, wobei die Waschdüse (202, 202a, 202b) so konfiguriert ist, dass sich die obere Endposition des Waschflüssigkeitsstroms (300), der von der Düse abgegeben wird, mit der Flüssigkeitsmenge der pro Zeiteinheit von der Waschdüse (202) abgegebenen Waschflüssigkeit ändert, wobei die Waschflüssigkeit, die die äußere Oberfläche der Probenabgabesonde (111b) gewaschen hat, und Systemwasser, das die innere Oberfläche der Probenabgabesonde (111b) gewaschen hat, durch Unterdruck abgesaugt und entfernt werden; und
eine Steuerungseinheit (118, 501), die konfiguriert ist, den Abgabemechanismus (111) zu steuern,
**dadurch gekennzeichnet, dass** beim Bestätigen einer Flüssigkeitsmenge der Waschflüssigkeit die Steuerungseinheit (118, 501) eine horizontale Position der Abgabesonde (111b) auf einer weiter stromabwärts liegenden Seite von der Waschdüse im Vergleich zu einer horizontalen Position der Abgabesonde (111b) beim Waschen der Abgabesonde (111b) positioniert, und
beim Bestätigen der Flüssigkeitsmenge der Waschflüssigkeit die Steuerungseinheit (118, 501) die Abgabesonde (111b) absenkt und die Steuerungseinheit (118, 501) die Flüssigkeitsmenge der Waschflüssigkeit basierend auf einer Höhe bestätigt, wenn die Waschflüssigkeitserfassungseinheit (210) den Waschflüssigkeitsstrom (202) erfasst.

7. Automatische Analysevorrichtung nach Anspruch 6, wobei beim Bestätigen der Flüssigkeitsmenge der Waschflüssigkeit die Steuerungseinheit (118, 501) eine Geschwindigkeit, mit der die Abgabesonde (111b) abgesenkt wird, langsamer macht als eine Geschwindigkeit, mit der die Abgabesonde (111b) beim Waschen der Abgabesonde (111b) abgesenkt wird.

8. Automatische Analysevorrichtung nach Anspruch 6, wobei beim Bestätigen der Flüssigkeitsmenge der Waschflüssigkeit die Steuerungseinheit (118, 501) beginnt, die Abgabesonde (111b) abzusenken, nachdem die Abgabe der Waschflüssigkeit von der Waschdüse (202a, 202b) gestartet wurde.

9. Automatische Analysevorrichtung nach Anspruch 8, umfassend
ein Proportionalventil (215), das konfiguriert ist, eine Flüssigkeitsmenge der Waschflüssigkeit einzustellen,
wobei die Steuerungseinheit Öffnungs- und Schließzustände des Proportionalventils (215) basierend auf einer Höhe ändert, wenn die Waschflüssigkeitserfassungseinheit (210) die Waschflüssigkeit erfasst.

10. Automatische Analysevorrichtung nach Anspruch 6,
wobei beim Bestätigen der Flüssigkeitsmenge der Waschflüssigkeit die Steuerungseinheit (118, 501) eine Durchflussrate der Waschflüssigkeit, mit der die Waschflüssigkeit von der Waschdüse (202a, 202b) abgegeben wird, langsamer macht als eine Durchflussrate der Waschflüssigkeit, mit der die Waschflüssigkeit von der Waschdüse (202a, 202b) beim Waschen der Abgabesonde (111b) abgegeben wird.

## Revendications

1. Analyseur automatique comprenant :
un mécanisme (111) de distribution incluant une sonde (111b) de distribution distribuant un échantillon ou un réactif dans un récipient (102) de réaction ;
un orifice (207) de décharge déchargeant un fluide de lavage comme un courant de fluide de lavage sur une surface externe de la sonde (111b) de distribution ;
une unité (209) de changement de quantité de liquide changeant une quantité par unité de temps du fluide de lavage devant être alimenté jusqu'à la sonde (111b) de distribution, dans lequel l'orifice (207) de décharge est configuré de telle façon que l'orientation de décharge du courant de fluide de lavage déchargé depuis l'orifice (207) de décharge de fluide de lavage change avec la quantité de liquide du fluide de lavage par unité de temps déchargé ;
une unité (210) de détection de fluide de lavage prévue au niveau du mécanisme (111) de distribution ; et
une section (118, 501) de commande commandant la sonde (111b) de distribution, l'unité (209) de changement de quantité de liquide, et l'unité (210) de détection de fluide de lavage,
au moment d'un lavage de la sonde (111b) de distribution, la section (118, 501) de commande permettant que du fluide de lavage d'une quantité de liquide de référence soit déchargé depuis l'orifice (207) de décharge dans un état de paramétrage d'une hauteur d'une extrémité d'embout de la sonde (111b) de distribution à une position de lavage de référence comme une première position (401), pour ainsi amener le fluide de lavage en contact avec une surface externe de la sonde (111b) de distribution qui repose dans une plage (402) de lavage de la première position (401) à une deuxième position (403) au-dessus de la première position (401) comme une cible, dans lequel le fluide de lavage qui a lavé la surface extérieure de la sonde (111b) de distribution d'échantillon et de l'eau de système qui a lavé la surface intérieure de la sonde (111b) de distribution d'échantillon sont aspirés d'une manière sous vide et évacués ;
**caractérisé en ce que**, au moment d'un ajustement de la quantité de fluide de lavage, la section (118, 501) de commande permet que la quantité de fluide de lavage soit graduellement augmentée par l'unité (209) de changement de quantité de liquide dans un état de rendre la hauteur de l'extrémité d'embout de la sonde (111b) de distribution plus haute que la deuxième position (403), dans lequel la deuxième position (403) est une position (403) de confirmation de quantité de fluide de lavage et est la même que la position la plus haute dans la plage (402) de lavage, et concerne une quantité de fluide de lavage au moment où l'unité (210) de détection de fluide de lavage détecte le courant de fluide de lavage, comme une quantité de liquide post-ajustement pour renouveler la quantité de liquide de référence.

2. Analyseur automatique selon la revendication 1, dans lequel
l'unité (209) de changement de quantité de liquide est une vanne électromagnétique prévue dans un trajet d'un canal d'écoulement d'un pompe (208) jusqu'à l'orifice (207) de décharge,
au moment d'un lavage de la sonde (111b) de distribution, la section (118, 501) de commande commande la vanne électromagnétique (209) à un degré d'ouverture de référence pour décharger le fluide de lavage depuis l'orifice (207) de décharge, et
au moment d'un ajustement de la quantité de fluide de lavage, la section (118, 501) de commande augmente le degré d'ouverture de la vanne électromagnétique (209), et renouvelle le degré d'ouverture de la vanne électromagnétique (209) au moment où l'unité (210) de détection de fluide de lavage commence à détecter le fluide de lavage, comme un degré d'ouverture de référence post-ajustement.

3. Analyseur automatique selon la revendication 1 ou 2, dans lequel l'unité (210) de détection de fluide de lavage est un dispositif de détection de niveau de liquide détectant une capacitance de la sonde (111b) de distribution pour détecter un niveau de liquide.

4. Analyseur automatique selon la revendication 1 ou 2, dans lequel l'analyseur automatique comprend une seringue (121, 122) exécutant une aspiration et une décharge de l'échantillon ou du réactif, et un capteur (204) de pression prévu dans un canal d'écoulement connectant la seringue et la sonde (111b) de distribution, et l'unité (210) de détection de fluide de lavage est l'unité de pression.

5. Analyseur automatique selon la revendication 1 ou 2, dans lequel, au moment d'un ajustement de la quantité de fluide de lavage, la section (118, 501) de commande donne une alarme dans un cas où l'unité (210) de détection de fluide de lavage ne détecte pas le fluide de lavage même si la quantité de fluide de lavage atteint une valeur de limite supérieure prescrite ou dans un cas où l'unité (210) de détection de fluide de lavage détecte le fluide de lavage avant que la quantité de fluide de lavage n'atteigne une valeur de limite inférieure prescrite.

6. Analyseur automatique comprenant :
un mécanisme (111) de distribution incluant une sonde (111b) de distribution configurée pour distribuer un échantillon ou un réactif dans un récipient (102) de réaction ;
une unité (210) de détection de fluide de lavage ;
une buse (202, 202a, 202b) de lavage configurée pour décharger un courant (300) de fluide de lavage jusqu'à la sonde (111b) de distribution, dans lequel l'unité (210) de détection de fluide de lavage est configurée pour détecter une position d'extrémité supérieure du courant (300) de fluide de lavage, dans lequel la buse (202, 202a, 202b) de lavage est configurée de telle façon que la position d'extrémité supérieure du courant (300) de fluide de lavage déchargé depuis la buse change avec la quantité de liquide du fluide de lavage par unité de temps déchargé depuis la buse (202) de lavage, dans lequel le fluide de lavage qui a lavé la surface extérieure de la sonde (111b) de distribution d'échantillon et de l'eau de système qui a lavé la surface intérieure de la sonde (111b) de distribution d'échantillon sont aspirés d'une manière sous vide et évacués ; et
une unité (118, 501) de commande configurée pour commander le mécanisme (111) de distribution,
**caractérisé en ce que**, lors d'une confirmation d'une quantité de liquide du fluide de lavage, l'unité (118, 501) de commande positionne une position horizontale de la sonde (111b) de distribution sur un côté plus en aval de la buse de lavage par comparaison avec une position horizontale de la sonde (111b) de distribution lors d'un lavage de la sonde (111b) de distribution, et
lors de la confirmation de la quantité de liquide du fluide de lavage, l'unité (118, 501) de commande abaisse la sonde (111b) de distribution et l'unité (118, 501) de commande confirme la quantité de liquide du fluide de lavage sur la base d'une hauteur lorsque l'unité (210) de détection de fluide de lavage détecte le courant (300) de fluide de lavage.

7. Analyseur automatique selon la revendication 6,
dans lequel, lors de la confirmation de la quantité de liquide du fluide de lavage, l'unité (118, 501) de commande ralentit la vitesse à laquelle la sonde (111b) de distribution est abaissée plus lente qu'une vitesse à laquelle la sonde (111b) de distribution est abaissée lors du lavage de la sonde (111b) de distribution.

8. Analyseur automatique selon la revendication 6,
dans lequel, lors de la confirmation de la quantité de liquide du fluide de lavage, l'unité (118, 501) de commande commence à abaisser la sonde (111b) de distribution après le démarrage de la décharge du fluide de lavage depuis la buse (202a, 202b) de lavage.

9. Analyseur automatique selon la revendication 8, comprenant
une vanne proportionnelle (215) configurée pour ajuster une quantité de liquide du fluide de lavage,
dans lequel l'unité de commande change des états d'ouverture et de fermeture de la vanne proportionnelle (215) sur la base d'une hauteur lorsque l'unité (210) de détection de fluide de lavage détecte le fluide de lavage.

10. Analyseur automatique selon la revendication 6,
dans lequel, lors de la confirmation de la quantité de liquide du fluide de lavage, l'unité (118, 501) de commande ralentit un débit du fluide de lavage auquel le fluide de lavage est déchargé depuis la buse (202a, 202b) de lavage plus lent qu'un débit du fluide de lavage auquel le fluide de lavage est déchargé depuis la buse (202a, 202b) de lavage lors du lavage de la sonde (111b) de distribution.
